# FASCICULE DE BREVET EUROPEEN

(11) **EP 2 555 992 B1**
(45) Date de publication et mention de la délivrance du brevet: **02.09.2015**
(21) Numéro de dépôt: 11713758.8
(22) Date de dépôt: 06.04.2011
(51) Int. Cl.: B65D 23/00, B65D 25/24, C03B 9/32

(54) **RECIPIENT, PROCEDE ET MODULE**
BEHÄLTER, VERFAHREN UND MODUL
CONTAINER, METHOD AND MODULE

(30) Priorité: 06.04.2010 FR 1052580
(43) Date de publication de la demande: 13.02.2013
(73) Titulaire: Lalique, 75008 Paris (FR)
(72) Inventeur: SCHILT, François Paul, F-57620 Saint Louis Les Bitche (FR)
(74) Mandataire: Delprat, Olivier
(86) Numéro de dépôt international: PCT/EP2011/055380
(87) Numéro de publication internationale: WO 2011/124623

(56) Documents cités:
- US-A- 3 776 711
- US-A1- 2005 084 633
- US-A1- 2008 308 558

## Description

L'invention concerne les récipients en particulier des flacons, des carafes, ... et plus particulièrement de tels récipients réalisés en cristal, voire en verre.

L'invention concerne également un procédé et un moule pour la fabrication de tels récipients.

Les récipients en verre ou en cristal sont fabriqués de façon manuelle ou industrielle à l'aide de techniques connues de soufflé. Lorsque ces récipients sont réalisés à partir du verre soufflé, on parlera de techniques appartenant au domaine de la verrerie. Lorsque ceux-ci sont réalisés en cristal, on parlera de techniques de cristallerie.

Actuellement, on peut réaliser ces récipients par une technique de soufflé fixe qui consiste à utiliser une canne creuse que l'on plonge dans une boule de verre ou de cristal en fusion. Cette technique consiste à souffler dans la boule, à l'aide de la canne, tout en la modifiant, à l'aide de ciseaux ou tout autre outil de modélisation, afin de réaliser les différentes formes pour les différents types de récipients.

On peut encore utiliser des moules dans lesquels on introduit le cristal ou le verre en fusion à l'aide de la canne creuse et on souffle dans la canne creuse pour réaliser les différentes formes des récipients.

Par ailleurs, on peut assembler différents objets afin de fabriquer des structures plus complexes. Par exemple, pour fabriquer un verre à pied, on pourra fabriquer séparément le verre et le pied, puis assembler les deux parties pour obtenir un objet final.

On peut, par exemple, assembler les différentes pièces d'un récipient en chauffant les pièces à des températures adéquates pour ainsi pouvoir les assembler par collage à chaud. On peut encore réaliser des décorations sur les objets par collage à chaud, c'est-à-dire qu'on chauffe un récipient réalisé en verre ou en cristal, puis on colle des parties de décoration en verre ou cristal en fusion sur l'objet.

L'assemblage par collage à chaud des différentes pièces d'un récipient est une technique complexe et nécessite d'être dans une gamme de températures précise, dans laquelle les pièces à assembler ne sont pas déformées et ne cassent pas sous l'effet de la température ou de la pression.

En outre, les récipients réalisés à partir de différentes pièces assemblées sont généralement fragiles et nécessitent des techniques d'assemblage élaborées pour que les différentes pièces assemblées ne se désolidarisent pas sous l'effet de la température lors de l'utilisation courante du récipient.

Le document US 2008/0308558 illustre un récipient selon le préambule de la revendication 1. Un autre exemple d'un récipient en verre où un corps interne creux est suspendu par un corps externe est divulgué dans le document US 2005/0084633. Un moule et un procédé de fabrication d'un récipient en verre est divulgué dans le document US 3776711.

Au vu de ce qui précède, le but que se propose d'atteindre l'invention est de proposer un récipient présentant une esthétique particulière et pouvant être réalisé à partir de techniques de soufflé qui soient simples à mettre en oeuvre.

Selon un aspect de l'invention, il est proposé un récipient du type comprenant d'une part, un corps creux interne destiné à contenir un produit, et comprenant une première extrémité fermée et une deuxième extrémité ouverte formant col, et d'autre part un corps externe.

Dans ce récipient, le corps externe est localement solidarisé au corps interne de sorte que le corps interne est maintenu en suspension par le corps externe.

Dans ce récipient, le corps interne et le corps externe sont solidaires et leur liaison permet de résister aux dilatations des corps du récipient. Cette liaison empêche le récipient d'éclater sous les contraintes mécaniques dues à la dilatation des corps au niveau de leur liaison. En outre, le récipient ainsi réalisé présente un aspect esthétique particulièrement avantageux.

Dans un mode de réalisation, le corps externe est localement solidarisé au col du corps interne.

Ainsi, on empêche l'extrémité fermée d'être en contact avec le corps externe, ce qui permet d'éviter de faire éclater le corps creux. En effet, l'extrémité fermée du corps interne peut avoir une enveloppe plus fine que celle du col, et dans ce cas une solidarisation de l'extrémité fermée avec le corps externe pourrait faire éclater le corps interne.

Avantageusement, les décorations prévues sur les parties du corps interne qui ne sont pas en contact avec le corps externe sont préservées.

Selon un autre mode de réalisation, le corps externe constitue un socle par lequel le récipient repose en appui.

Le corps externe peut avoir une forme globalement annulaire et s'étendre dans un plan sagittal du corps interne.

Le corps externe peut également être un corps creux destiné à contenir un deuxième produit.

Le récipient peut être réalisé en cristal ou en verre.

Selon un autre aspect, il est proposé un moule pour la fabrication d'un récipient du type comprenant un corps creux interne destiné à contenir un produit et comprenant une première extrémité fermée et une deuxième extrémité ouverte formant col et un corps externe localement solidarisé au corps interne de sorte que le corps interne est maintenu en suspension par le corps externe.

Ce moule comprend un logement pour recevoir le corps interne et une empreinte pour le moulage du corps externe, l'empreinte comprenant un relief en saillie séparant le logement de l'empreinte tout en reliant localement le logement et l'empreinte.

Un tel moule permet de sélectionner les parties du corps interne du récipient qui seront en contact avec le corps externe.

Grâce à un tel moule, on peut assembler différentes pièces d'un récipient, en offrant la possibilité de solidariser, par collage à chaud, certaines parties du corps interne.

Selon un mode de réalisation, le relief en saillie est interrompu à l'endroit du col du corps interne.

Le relief en saillie peut, en outre, avoir une forme globalement annulaire.

Selon encore un autre aspect, il est proposé un procédé de fabrication d'un récipient du type comprenant un corps creux interne destiné à contenir un produit et comprenant une première extrémité fermée et une deuxième extrémité ouverte formant col, et un corps externe localement solidarisé au corps interne, dans lequel on réalise le corps interne, on loge le corps interne dans l'empreinte d'un moule, et l'on réalise par moulage le corps externe.

Dans ce procédé, lors du moulage, on solidarise localement le corps externe au corps interne de sorte qu'au démoulage, le corps interne est maintenu en suspension par le corps externe.

Ainsi, on fournit un procédé suffisamment simple pour la réalisation de récipients robustes et d'aspect esthétique particulièrement avantageux.

Par ailleurs, on minimise les contacts entre le produit injecté pour réaliser le corps externe et le corps interne du récipient. On peut donc diminuer les effets de la température du produit injecté sur le corps interne du récipient. Ce procédé permet ainsi de diminuer les risques d'éclatement du récipient lorsqu'on injecte le produit.

Selon un mode de mise en oeuvre, on solidarise localement le corps externe au col du corps interne.

Le produit injecté pour le moulage du corps externe peut comprendre du verre ou du cristal.

D'autres avantages et caractéristiques de l'invention apparaîtront à l'examen de la description détaillée de modes de réalisation et de mise en oeuvre, nullement limitatifs, et des dessins annexés sur lesquels :
- la figure 1 illustre de façon schématique un récipient selon un mode de réalisation de l'invention ;
- la figure 2 illustre de façon schématique un moule ;
- la figure 3 illustre de façon schématique l'une des étapes principales du procédé selon l'invention.

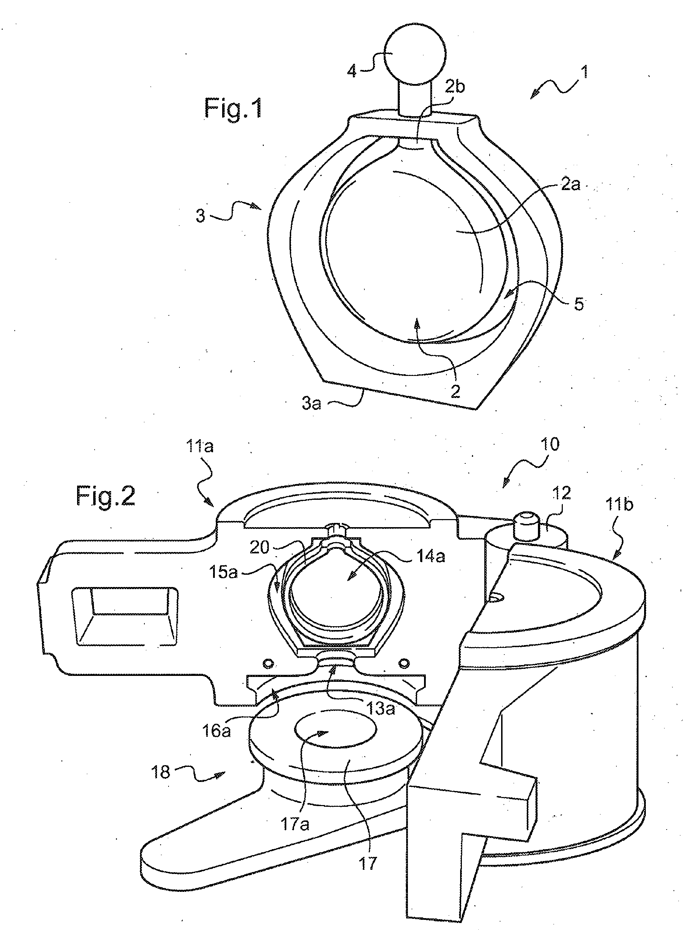

Sur la figure 1, on a représenté une vue schématique d'un récipient 1 comprenant un corps interne 2 et un corps externe 3. Le récipient 1 peut contenir tout type de produit, comme un fluide ou un solide.

A titre d'exemple, le récipient 1 illustré à la figure 1 est un flacon destiné à contenir un parfum. Mais cet exemple n'est pas limitatif, de sorte que l'invention concerne de manière générale tout type de récipient comprenant un contenant suspendu par un corps.

Le corps interne 2 constitue ainsi un réservoir et comprend une première extrémité fermée 2a, notée également réservoir, et une deuxième extrémité ouverte formant col 2b.

Le col 2b permet de remplir le réservoir 2a avec un fluide.

Le corps externe 3 est solidarisé au corps interne 2 au niveau du col 2b du corps interne 2. Par exemple, le corps externe 3 est solidarisé localement au corps interne 2 par un collage à chaud.

En outre, le flacon 1 comprend un bouchon 4 configuré pour obturer de façon amovible le col 2b.

Dans le mode de réalisation illustré à la figure 1, le corps externe 3 englobe de manière partielle le corps interne 2.

Lorsque le corps externe 3 englobe partiellement le corps interne 2, on dit que le corps externe 3 est ajouré, le réservoir 2a pouvant dès lors être accessible depuis l'extérieur.

En outre, sur la figure 1, le corps externe 3 forme un socle pour le récipient 1. Le corps externe 3 comporte ainsi une surface d'extrémité plane 3a par laquelle le récipient 1 peut reposer.

On voit que dans cet exemple, le corps externe a une forme annulaire et s'étend de manière sagittale par rapport au corps interne.

Par ailleurs, dans ce mode de réalisation, un espace 5 est créé tout autour du réservoir 2a entre le corps interne 2 et le corps externe 3. Ainsi, le corps externe 3 permet de suspendre le corps interne 2.

En outre, le corps externe 3 s'étend localement autour du col 2b du corps interne 2, et en variante, il peut s'étendre localement autour du réservoir 2a du corps interne 2.

Sur la figure 2, on a représenté un moule 10 pour la fabrication du récipient 1 décrit précédemment.

Le moule 10 comprend deux demi-cylindres 11a, 11b symétriques, et qui sont montés fixes aux deux extrémités d'une charnière 12. La charnière 12 permet d'ouvrir le moule 10 afin de loger le corps interne 2 du récipient 1 à l'intérieur du moule 10. Puis on ferme le moule 10 de manière à joindre les deux demi-cylindres 11a, 11 b afin de former un seul cylindre.

A des fins de simplification, on ne décrira qu'un demi-cylindre 11a, le demi-cylindre 11b étant symétrique au demi-cylindre 11a.

Le demi-cylindre 11a comprend également une ouverture 13a destinée à recevoir un produit à injecter dans le moule 10 et une chambre 16a en communication avec l'ouverture 13a. Cette chambre 16a est configurée pour recevoir la tête 17 d'un injecteur 18, ce dernier étant également appelé « nourrice ».

Cette nourrice 18 permet de recevoir du cristal ou du verre en fusion par une ouverture 17a prévue dans la tête 17 de l'injecteur 18. La nourrice 18 comprend également, à sa base un piston, non représenté sur la figure à des fins de simplification, qui permet de faire pression sur le cristal ou le verre en fusion afin de l'injecter dans le moule 10.

Comme on le voit, le demi-cylindre 11a comprend un logement 14a pour recevoir le corps interne 2 du récipient 1 et une empreinte 15a.

On notera que l'empreinte 15a du moule est dotée d'un relief 20 en saillie qui s'étend à l'endroit de l'espace 5 à former entre le corps externe 3 et le corps interne 2.

Le relief 20 a donc ici une forme globalement annulaire qui correspond à la forme périphérique interne du corps externe 3 et à la forme périphérique externe du corps interne 2.

Le relief 20 est toutefois interrompu au niveau de la zone de démoulage du col de manière à former, dans cette zone, une communication entre le logement 14a et l'empreinte 15a.

Pour la réalisation d'un récipient au moyen d'un tel moule 10, au cours d'une première étape on réalise un corps creux interne 2 selon, par exemple, une technique du soufflé fixe, manuelle ou industrielle, dans un moule en fonte pouvant comporter par exemple un décor.

Dans une deuxième étape, le corps interne 2 est refroidi dans un four de recuisson. Ce four de recuisson permet de diminuer progressivement la température du corps interne 2 afin d'empêcher les chocs thermiques lors du refroidissement. En effet, un refroidissement non contrôlé pourrait faire éclater le corps interne 2.

Dans une troisième étape, après un contrôle de qualité, le décor du corps interne 2 est manuellement gravé au diamant puis poli.

Dans une quatrième étape, le corps interne 2 est réchauffé à une température comprise entre 430°C et 520°C. Au cours de cette étape, on prélève au moyen d'une canne de soufflage creuse 30 une petite quantité de cristal en fusion, puis on forme une boule creuse 31 ouverte à son extrémité au diamètre du col 2b du corps interne 2. On colle alors par chauffage la boule creuse 31 par son extrémité sur le col 2b du corps interne 2. Cette opération permet de recoller à chaud le corps interne 2 à la canne 30 tout en permettant de souffler dans celui-ci.

Selon une cinquième étape, le corps interne 2 en bout de canne 30 est réchauffé dans un four pendant environ 1 minute pour permettre le rééquilibrage de sa température.

Dans une sixième étape, on amène du cristal ou du verre en fusion dans la nourrice 18 du moule 10 décrit ci avant en référence à la figure 2.

Dans une septième étape, on ajuste et on suspend le corps interne 2 dans le moule 10. On maintient alors la canne 30 parfaitement alignée et centrée sur l'axe du moule 10.

Dans une huitième étape, le cristal ou verre en fusion contenu dans la nourrice 18 est injecté dans le moule 10 à l'aide du piston. Cette étape permet d'emprisonner le col 2b du corps interne 2 dans le corps externe 3 qui se forme lors du refroidissement du produit injecté. Par cette huitième étape, on solidarise le corps externe 3 avec le corps interne 2 par collage à chaud.

Puis on démoule et on rebrûle au chalumeau les parties sensibles du récipient 1 pour stabiliser l'ensemble.

Dans une dixième étape, on recuit le récipient 1, pendant environ vingt-quatre heures.

Après un autre contrôle de qualité, on taille et on met aux dimensions définitives le récipient 1 à froid.

Ensuite, on perce et on rode le bouchon dans le col 2b afin de garantir une bonne étanchéité du récipient.

On polit alors le récipient 1 et le bouchon 4. Enfin, un contrôle de qualité final est effectué pour tester la robustesse du récipient définitif.

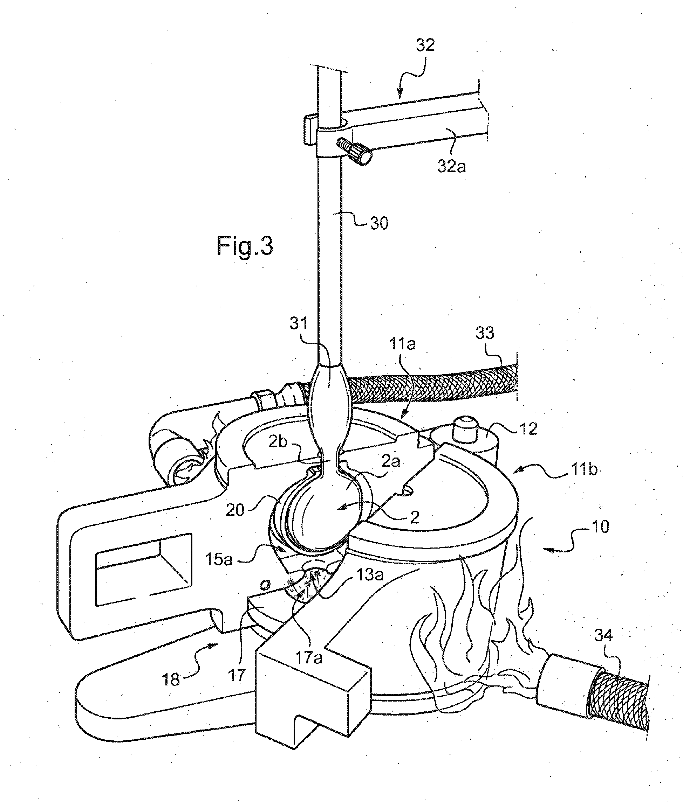

Sur la figure 3, on a représenté de façon schématique la septième étape du procédé décrit ci avant.

On a également reporté sur cette figure les références des éléments décrits aux figures précédentes.

Sur la figure 3, on peut voir la canne creuse 30 collée à la boule creuse 31, cette dernière étant collée au col 2b du corps interne 2.

Ainsi cet ensemble formé de la canne 30, de la boule 31 et du corps interne 2 est maintenu dans le logement du moule 10 à l'aide de moyens de maintien 32. Ces moyens de maintien 32 comprennent un pied, non représenté sur la figure à des fins de simplification, sur lequel est monté en bras 32a réglable qui supporte la canne 30.

Des chalumeaux 33,34 sont également disposés autour du moule 10 et permettent de maintenir à une température adéquate le corps interne 2 et le produit injecté dans le moule 10.

Ce procédé de fabrication permet en outre de ne pas détruire les motifs et décorations réalisés sur le corps interne 2.

Ainsi, on fournit un objet en verre ou en cristal suffisamment robuste et qui peut recevoir des liquides à température ambiante ou à d'autres températures sensiblement plus élevées ou inférieures, et cela sans déformer ni faire éclater l'objet.

## Revendications

1. Récipient en verre ou en cristal, du type comprenant un corps creux interne (2) destiné à contenir un produit, et comprenant une première extrémité fermée (2a) et une deuxième extrémité ouverte (2b) formant col, et un corps externe (3), le corps externe (3) étant localement solidarisé au corps interne (2) de sorte que le corps interne (2) est maintenu en suspension par le corps externe (3) qui s'étend dans un plan sagittal du corps interne (2), **caractérisé en ce que** le corps externe (3) a une forme globalement annulaire.

2. Récipient selon la revendication 1, dans lequel le corps externe (3) est localement solidarisé au col (2b) du corps interne (2).

3. Récipient selon l'une des revendications 1 ou 2, dans lequel le corps externe (3) constitue un socle par lequel le récipient repose en appui.

4. Récipient selon l'une des revendications 1 à 3, dans lequel le corps externe (3) est un corps creux destiné à contenir un deuxième produit.

5. Moule pour la fabrication d'un récipient selon la revendication 1, du type comprenant un corps creux interne (2) destiné à contenir un produit et comprenant une première extrémité fermée (2a) et une deuxième extrémité ouverte (2b) formant col et un corps externe (3) localement solidarisé au corps interne (2) de sorte que le corps interne (2) est maintenu en suspension par le corps externe (3), où le moule comprend un logement (14a) pour recevoir le corps interne (2) et une empreinte (15a) pour le moulage du corps externe (3), l'empreinte (15a) comprenant un relief (20) en saillie séparant le logement (14a) de l'empreinte (15a) tout en reliant localement le logement (14a) et l'empreinte (15a).

6. Moule selon la revendications 5, dans lequel le relief (20) saillie est interrompu à l'endroit du col (2b) du corps interne (2).

7. Moule selon l'une des revendications 5, ou 6, dans lequel le relief (20) en saillie a une forme globalement annulaire.

8. Procédé de fabrication d'un récipient selon la revendication 1, du type comprenant un corps creux interne destiné à contenir un produit et comprenant une première extrémité fermée et une deuxième extrémité ouverte formant col, et un corps externe localement solidarisé au corps interne, dans lequel on réalise le corps interne, on loge le corps interne dans l'empreinte d'un moule, et l'on réalise par moulage le corps externe, où, lors du moulage, on solidarise localement le corps externe au corps interne de sorte qu'au démoulage, le corps interne est maintenu en suspension par le corps externe.

9. Procédé selon la revendication 8, dans lequel on solidarise localement le corps externe au col du corps interne.

## Patentansprüche

1. Behälter aus Glas oder Kristall, des Typs, der einen inneren Hohlkörper (2) umfasst, der dazu bestimmt ist, ein Produkt zu entfalten, und umfassend ein erstes geschlossenes Ende (2a) und ein zweites offenes Ende (2b), das einen Hals bildet, und einen äußeren Körper (3), wobei der äußere Körper (3) lokal mit dem inneren Körper (2) verbunden ist, so dass der innere Körper (2) vom äußeren Körper (3) hängend gehalten wird, welcher sich in einer Sagittalebene des inneren Körpers (2) erstreckt, **dadurch gekennzeichnet, dass** der äußere Körper (3) eine global ringförmige Form hat.

2. Behälter nach Anspruch 1, bei dem der äußere Körper (3) lokal mit dem Hals (2b) des inneren Körpers (2) verbunden ist.

3. Behälter nach einem der Ansprüche 1 oder 2, bei dem der äußere Körper (3) einen Sockel darstellt, auf den der Behälter aufgesetzt ist.

4. Behälter nach einem der Ansprüche 1 bis 3, bei dem der äußere Körper (3) ein Hohlkörper ist, der dazu bestimmt ist, ein zweites Produkt zu enthalten.

5. Form für die Herstellung eines Behälters nach Anspruch 1, des Typs, der einen inneren Hohlkörper (2) umfasst, der dazu bestimmt ist, ein Produkt zu enthalten, und umfassend ein erstes geschlossenes Ende (2a) und ein zweites offenes Ende (2b), das einen Hals bildet, und einen äußeren Körper (3), der lokal mit dem inneren Körper (2) verbunden ist, so dass der innere Körper (2) vom äußeren Körper (3) hängend gehalten wird, wobei die Form eine Lagerung (14a) für die Aufnahme des inneren Körpers (2) und einen Abdruck (15a) zum Formen des äußeren Körpers (3) umfasst, wobei der Abdruck (15a) ein vorspringendes Relief (20) umfasst, das die Lagerung (14a) von dem Abdruck (15a) trennt, wobei es lokal die Lagerung (14a) und den Abdruck (15a) verbindet

6. Form nach Anspruch 5, bei der das vorspringende Relief (20) an der Stelle des Halses (2b) des inneren Körpers (2) unterbrochen ist.

7. Form nach einem der Ansprüche 5 oder 6, bei der das vorspringende Relief (20) eine global ringförmige Form hat.

8. Verfahren zur Herstellung eines Behälters nach Anspruch 1, des Typs, der einen inneren Hohlkörper umfasst, der dazu bestimmt ist, ein Produkt zu enthalten, und umfassend ein erstes geschlossenes Ende und ein zweites offenes Ende, das einen Hals bildet, und einen äußeren Körper, der lokal mit dem inneren Körper verbunden ist, bei dem der innere Körper hergestellt wird, der innere Körper in dem Abdruck einer Form angeordnet wird und durch Gussformen der äußere Körper hergestellt wird, wobei beim Gussformen lokal der äußere Körper mit dem inneren Körper verbunden wird, so dass beim Entformen der innere Körper hängend vom äußeren Körper gehalten wird.

9. Verfahren nach Anspruch 8, bei dem lokal der äußere Körper mit dem Hals des inneren Körpers verbunden wird.

## Claims

1. Glass or crystal container including an inner hollow body (2) for containing a product, and including a first closed end (2a) and a second neck open end (2b), and an outer body (3), the outer body (3) being rigidly connected locally to the inner body (2) such that the inner body (2) is held suspended by the outer body (3) which extends in a sagittal plane of the inter body (2), **characterized in that** the outer body (3) has a generally annular shape.

2. Container according to Claim 1, wherein the outer body (3) is rigidly connected locally to the neck (2b) of the inner body (2).

3. Container according to either of Claims 1 and 2, wherein the outer body (3) forms a base via which the container is supported.

4. Container according to one of Claims 1 to 3, wherein the outer body (3) is a hollow body for containing a second product.

5. Mold for the manufacture of a container according to Claim 1, including an inner hollow body (2) for containing a product and including a first closed end (2a) and a second neck open end (2b) and an outer body (3) rigidly connected locally to the inner body (2) such that the inner body (2) is held suspended by the outer body (3), the mold including a housing (14a) for receiving the inner body (2) and an impression (15a) for molding the outer body (3), the impression (15a) including a projecting relief (20) separating the housing (14a) from the impression (15a) while locally connecting the housing (14a) and the impression (15a).

6. Mold according to Claim 5, wherein the projecting relief (20) is interrupted at the location of the neck (2b) of the inner body (2).

7. Mold according to either of Claims 5 and 6, wherein the projecting relief (20) has a generally annular shape.

8. Method for manufacturing a container according to claim 1, including an inner hollow body for containing a product and including a first closed end and a second neck open end, and an outer body rigidly connected locally to the inner body, wherein the inner body is produced, the inner body is housed in the impression of a mold, and the outer body is produced by molding, the outer body being rigidly connected locally, during molding, to the inner body such that, when opening the mold, the inner body is held suspended by the outer body.

9. Method according to Claim 8, wherein the outer body is rigidly connected locally to the neck of the inner body.
